Europäisches Patentamt

European Patent Office

Office européen des brevets

(19)

(11) Veröffentlichungsnummer: **0 348 806**
**A2**

## (12) EUROPÄISCHE PATENTANMELDUNG

(21) Anmeldenummer: 89111274.0

(22) Anmeldetag: 21.06.89

(51) Int. Cl.4: **B65H 18/10**

(30) Priorität: 30.06.88 DE 3822106

(43) Veröffentlichungstag der Anmeldung:
03.01.90 Patentblatt 90/01

(84) Benannte Vertragsstaaten:
CH DE ES FR GB IT LI SE

(71) Anmelder: **Ludwig Boschert GmbH & Co. KG
Maschinen- und Apparatebau
Mattenstrasse 1
D-7850 Lörrach-Hauingen(DE)**

(72) Erfinder: **Kunz, Udo
Dornhaldenstrasse 16
D-7850 Lörrach-Hauingen(DE)**

(74) Vertreter: **Schmitt, Hans, Dipl.-Ing. et al
Patentanwälte Dipl.-Ing H. Schmitt Dipl.-Ing.
W. Maucher Dreikönigstrasse 13
D-7800 Freiburg(DE)**

(54) Vorrichtung zum Kuppeln eines Wickelstabes od.dgl.mit einer Mitnehmerwelle.

(57) Ein Klapplager (1) mit einem eine Kupplungsausnehmung (5) aufweisenden Aufnahmeeinsatz (11)
und einer diesen enthaltenden Aufnahmeteil (6) hat
an dem Aufnahmeeinsatz (11) einen eigenen Verschluß (8), der von einem schwenkbaren Handrad in
Schließstellung gehalten und gedrückt werden kann,
gleichzeitig aber erlaubt, den vorzugsweise lösbaren
Aufnahmeeinsatz (11) nicht nur innerhalb des Handrades (10), sondern dieses überragend vorzusehen
und somit eine größere axiale Kupplungslänge zu
bewirken.

Fig. 4

EP 0 348 806 A2

## Vorrichtung zum Kuppeln eines Wickelstabes od.dgl. mit einer Mitnehmerwelle

Die Erfindung betrifft eine Vorrichtung zum Kuppeln eines Wikkelstabes od. dgl. mit einer Mitnehmerwelle einer Wickelmaschine, wobei der Wickelstab einen koaxialen Kupplungszapfen aufweist und dieser Kupplungszapfen in eine Ausnehmung eines Aufnahmeteiles einsetzbar und aus diesem aushebbar ist, wobei in Drehrichtung formschlüssig miteinander zusammenwirkende Bereiche miteinander kuppelbar sind und wobei der Kupplungszapfen in Gebrauchsstellung von einem die Eintrittsöffnung in die Ausnehmung verschließenden Verschluß übergriffen ist, welcher Verschluß von einem um eine senkrecht zu dem Kupplungszapfen orientierte Achse schwenkbaren oder klappbaren Handrad gebildet oder in Schließstellung gehalten ist und wobei die Ausnehmung für den Kupplungszapfen in einem von dem Handrad in Gebrauchsstellung umschlossenen Aufnahmeeinsatz angeordnet ist.

Eine Vorrichtung zum Kuppeln eines Wickelstabes mit einer Mitnehmerwelle und dabei einem eine Ausnehmung aufweisenden Aufnahmeteil zum Einsetzen eines Kupplungszapfens des Wickelstabes sowie einem klappbaren Handrad ist aus der DE-PS 917 592 schon geraume Zeit bekannt. Um dabei zwischen Mitnehmerwelle und Wickelstab über das Aufnahmeteil und den Kupplungszapfen ein Drehmoment zu erzeugen, ist dabei die Ausnehmung mehreckig, insbesondere quadratisch ausgebildet und demgemäß auch die Kontur des Kupplungszapfens geformt. Bei einer solchen Formgebung sind Toleranzen und ein gewisses Spiel nicht zu vermeiden, so daß vor allem bei den immer mehr zunehmenden Wickelgewichten und den daraus resultierenden Biegebelastungen der Wickelstäbe und ihrer Kupplungszapfen an den Ausnehmungen und Aufnahmeteilen und auch an dem klappbaren Handrad Verschleiß auftritt, so daß nach einer gewissen Zeit die Vorrichtung und vor allem der Aufnahmeteil, gegebenenfalls auch der Kupplungszapfen unbrauchbar werden.

Es ist deshalb aus der DE-PS 29 32 895 auch schon eine Vorrichtung der eingangs erwähnten Art bekannt, bei welcher die Ausnehmung des Aufnahmeteiles in einem Aufnahmeeinsatz angeordnet ist. Dieser kann aus verschleißfesterem Werkstoff oder bevorzugt auswechselbar sein, so daß die aufgrund der vorerwähnten Verschleißerscheinungen notwendige Reparatur vereinfacht ist. Dabei kann gemäß dieser DE-PS 29 32 895 auch an dem klappbaren Handrad ein entsprechendes auswechselbares Verschlußteil vorgesehen sein, Um die ungehinderte Öffnungs- und Schließbewegung des klappbaren Handrades zu erlauben, ist jedoch die axiale Erstreckung des Aufnahmeteiles und seines Aufnahmeeinsatzes sowie der darin vorgesehenen Ausnehmung begrenzt. Somit ist nach wie vor die mögliche Gewichtsbelastung der Wickelwelle beschränkt bzw. Durchbiegungen der Wickelwelle und des Kupplungszapfens führen zu exzentrischen Drehbewegungen und zu einem entsprechenden Verschleiß des Aufnahmeeinsatzes und des Kupplungszapfens, so daß nach einer gewissen Zeit selbst nach mehrmaligem Auswechseln des Aufnahmeeinsatzes die Wickelwelle und ihre Kupplungszapfen unbrauchbar werden können. Dies gilt um so mehr und tritt um so eher ein, je höher die Abzug- oder Aufwickelgeschwindigkeit der Wickelmaschine ist. Umgekehrt kann man sagen, daß die bisherigen Vorrichtungen zum Kuppeln eines Wikkelstabes die Auf- und Abwickelgeschwindigkeiten begrenzen.

Es besteht deshalb die Aufgabe, eine Vorrichtung der eingangs genannten Art zu schaffen, mit welcher eventuelle Überlastungen der Wickelwelle und hohe Drehzahlen der Wickelwelle möglich sind und dennoch der Aufnahmeeinsatz und der Kupplungszapfen eine hohe Lebensdauer haben.

Die Lösung dieser scheinbar widersprüchlichen Aufgabe besteht darin, daß der Aufnahmeeinsatz und sein Verschluß das Handrad in dessen Schließposition stirnseitig auf der der Lagerung des Aufnahmeteiles abgewandten, der Wickelwelle zugewandten Seite überragen und die axiale Länge des Aufnahmeteiles, seines Verschlusses und der Aufnahmeausnehmung größer als die Breite des Handrades ist und daß der Verschluß für die Ausnehmung des Aufnahmeeinsatzes an dem Aufnahmeeinsatz selbst angeordnet und bei geöffnetem Handrad von diesem zum Öffnen und Schließen freigegeben ist.

Durch diese Maßnahmen ergibt sich nun die Möglichkeit, das Handrad in unveränderter Weise klappbar zu gestalten und mindestens als Teil des Verschlusses der Ausnehmung zu benutzen, diese aber dennoch erheblich länger als die Breite des Handrades zu machen. Das Handrad kann nämlich nach wie vor um seine Schwenkachse von der Ausnehmung weggeklappt werden, während diese mit einem entsprechend längeren eigenen Verschluß , der in Schließstellung aber von dem Handrad in üblicher Weise gesichert wird, einen längeren Kupplungszapfen zusammen mit der Aufnahme-Ausnehmung formschlüssig umschließen kann. Somit können Biegebelastungen auf den Kupplungszapfen wesentlich besser ausgeglichen oder aufgefangen werden, so daß entsprechend höhere Geschwindigkeiten und Drehzahlen der Wickelwelle möglich werden und dennoch die gesamte Vorrichtung eine längere Lebensdauer bekommt. Vor allem die Befesti gung des eigentlichen Verschlusses der Aufnahme-Ausnehmung an dem Aufnahmeeinsatz erlaubt dabei die größere Länge des Kupplungsbereiches an dem Kupplungszapfen, ohne die Funktion des klappbaren Handrades zu beeinträchtigen, da dieses nach wie vor seine Schwenkbewegung in Öffnungsposition mit einem entsprechenden kreisbogenförmigen Verlauf durchführen kann, ohne durch die größere Breite des Verschlusses mit dem Kupplungszapfen oder dem Aufnahmeteil zu kollidieren oder eine komplizierte, von der Schwenk- oder Klappbewegung abweichende Öffnungsbewegung notwendig zu machen. Entsprechend fest kann das Handrad den Verschluß in Schließstellung erfassen und fixieren. Ein weiterer Vorteil besteht darin, daß die zu erwartende längere Lebensdauer des Aufnahmeteiles und vor allem des Kupplungszapfens auch eine genauere Bearbeitung dieser Teile lohnend macht, so daß dadurch ein eventuelles Spiel vermindert und somit die Lebensdauer weiter erhöht wird.

Eine besonders zweckmäßige und einfache Konstruktion ergibt sich, wenn der Verschluß des Aufnahmeeinsatzes an dem einen Rand der Aufnahmeausnehmung schwenkbar befestigt ist. Nach dem Aufklappen des Handrades kann also der Verschluß aufgeschwenkt und danach der Kupplungszapfen ausgehoben oder eingesetzt werden, wonach der Verschluß wieder zugeschwenkt und dann das Handrad zugeklappt werden.

Dabei kann die Schwenklagerung des Verschlusses der Aufnahme lösbar und wahlweise an dem einen oder dem anderen Öffnungsrand anbringbar sein. Dies erleichtert und vereinfacht die gesamte Konstruktion noch mehr, weil dadurch die Vorrichtung sehr einfach für beide Enden einer Wickelwelle vorgesehen werden kann, wo die beiden Vorrichtungen bezüglich des Verschlusses praktisch spiegelbildlich gestaltet sein sollten, damit das Einlegen und Ausheben der Wickelwelle möglichst einfach ist.

Als Schwenkachse für den aufschwenkbaren Verschluß der Aufnahmeöffnung kann ein ausziehbarer Stift, insbesondere Kerbstift vorgesehen sein, für welchen beidseits der Aufnahmeöffnung eine Einstecköffnung oder -bohrung vorgesehen sein kann. Somit läßt sich auch eine für die eine Öffnungsrichtung vorgesehene Vorrichtung sehr leicht auf eine andere Öffnungsrichtung ihres Verschlusses umbauen. Es genügt, den Stift zu ziehen und den Verschluß damit an der gegenüberliegenden Einstecköffnung zu befestigen.

Eine weitere vorteilhafte und zweckmäßige Ausgestaltung der Erfindung zur Berücksichtigung zweier möglichst identischer, aber spiegelsymmetrisch ausgebildeter Vorrichtungen an beiden Enden einer Wickelwelle kann darin bestehen, daß der Aufnahmeeinsatz lösbar und um eine vertikale Achse um 180° gedreht ebenfalls in die Aufnahme einsetzbar ist. Dadurch kann derselbe Aufnahmeeinsatz wahlweise in dem einen oder anderen Lager einer Wickelwelle Verwendung finden bzw. die Aufnahmeeinsätze für die beiden einander gegenüberliegenden und spiegelbildlich zueinander angeordneten Lagervorrichtungen können in gleicher Weise hergestellt werden. Außerdem kann nach einem nach längerer Zeit doch am stirnseitigen Ende der Aufnahmeausnehmung austretender Verschleiß zunächst dadurch unwirksam gemacht werden, daß die Aufnahmeeinsätze entsprechend gedreht oder getauscht werden. Es können dann ihre bisher der Wickelwelle abgewandten und somit einem Verschleiß durch Biegebewegungen weniger ausgesetzten Stirnseiten nun der Wickelwelle zugewandt werden.

Wie schon von den eingangs genannten Vorrichtungen her bekannt, können die Aufnahmeausnehmungen einen mehrkantförmigen Querschnitt haben, wodurch eine gute Übertragung des Drehmomentes erreicht wird. Preiswerter und einfacher ist es jedoch, wenn für den Formschluß in Drehrichtung in dem Aufnahmeeinsatz wenigstens ein Keil oder eine Feder und an dem Kupplungszapfen wenigstens eine diesen Keil oder die Feder beim Einsetzen formschlüssig übergreifende Nut vorgesehen ist. Dabei kann die Aufnahmeausnehmung innerhalb des Aufnahmeeinsatzes und der Kupplungszapfen einen kreisrunden Querschnitt haben und der Verschluß des Aufnahmeeinsatzes kann an seiner dem Kupplungszapfen zugewandten Seite vorzugsweise eine zu der Krümmung der Oberfläche des Kupplungszapfens passende kreisbogenförmige Kontur haben. Die erfindungsgemäße Anordnung eines eigenen Verschlusses an dem Aufnahmeeinsatz erlaubt somit insbesondere im Zusammenwirken mit wenigstens einem Keil oder einer Feder die Verwendung eines im Querschnitt kreisrunden Kupplungszapfens, der nicht nur einfacher und preiswerter herstellbar ist, sondern bei welchem gleichzeitig die Toleranzen wesentlich leichter geringgehalten werden können als an einem Mehrkant. Somit kann der Rundlauf der gesamten Vorrichtung weiter verbessert und damit die Lebensdauer erhöht werden. Ferner kann an einem kreisrunden Querschnitt bei gleicher Querschnittsfläche ein grösseres Drehmoment übertragen werden.

Um während der Drehung der Wickelwelle insbesondere mit hohen Drehzahlen eventuelle Exzentrizitäten und ein geringfügiges Spiel in ihrer Wirkung auszuschalten oder die schädliche Wirkung wenigstens zu begrenzen, ist es zweckmäßig, wenn der Verschluß des Aufnahmeeinsatzes in Gebrauchsstellung an dem Kupplungszapfen anpreßbar ist. Dadurch wird der Kupplungszapfen praktisch an seinem gesamten Umfang innerhalb des Aufnahmeeinsatzes spielfrei gemacht.

Dabei kann der Verschluß des Aufnahmeeinsatzes durch die ihn übergreifende Ausnehmung des Handrades gegen den Kupplungszapfen anpreßbar und anklemmbar sein. Dies kann auf einfache Weise dadurch geschehen, daß der Schwenkbogen der inneren Kontur der Ausnehmung des Handrades so gelegt ist, daß diese innere Ausnehmung des Handrades bei dessen Verschwenkung den zunächst noch etwas höher stehenden Verschluß niederdrückt.

Eine zusätzlich oder stattdessen mögliche Maßnahme zum Anpressen des Verschlusses an den Kupplungszapfen kann darin bestehen, daß das Handrad ein in Schließstellung die Oberseite des Verschlusses des Aufnahmeeinsatzes beaufschlagendes Klemmstück aufweist. Dadurch ist es möglich, das Klapprad sehr leicht hin und herbewegbar zu machen und die Anpressung und Verklemmung erst in Schließstellung und nicht durch die Schließbewegung durchzuführen.

Vorteilhaft ist es, wenn das Klemmstück in dem Klapprad eine Exzenterscheibe oder Nockenscheibe ist, deren exzentrischer Bereich in Schließstellung die Oberseite des Verschlusses des Aufnahmeeinsatzes beaufschlagt und vorzugsweise selbsthemmend gehalten ist. Dabei kann die Exzenterscheibe innerhalb des Klapprades in ihrer Ausnehmung und gegenüber ihrer Drehlagerung in radialer Richtung Spiel haben, welches kleiner als die Exzentrizität des Klemmbereiches ist. Somit kann sich diese Exzenterscheibe praktisch selbsttätig in die günstigste Klemmstellung bewegen, wenn sie in Schließstellung verdreht wird.

Eine besonders günstige Ausgestaltung des an dem Aufnahmeeinsatz vorgesehenen Verschlusses für das Zusammenwirken mit der den Verschluß in erster Linie kraftschlüssig festliegenden und niederdrückenden Exzenterscheibe kann dabei darin bestehen, daß an dem Verschluß eine Nut od.dgl. Ausnehmung vorgesehen ist, in welche die Exzenterscheibe in Schließstellung eingreift und an deren Grund und/oder Rand die Exzenterscheibe ihre Klemmkraft ausübt. Es ergibt sich dadurch nämlich auch in axialer Richtung eine wirksame Verriegelung des Klapprades an dem Verschluß und somit an dem Aufnahmeeinsatz. Zwar könnte schon die Verklemmung der Klemm-oder Exzenterscheibe an einer glatten Oberseite des Verschlusses eine genügende Fixierung auch des Handrades gegen ungewollte Verstellbewegungen in Öffnungsrichtung bewirken, jedoch kann der zusätzliche Formschluß selbst dann noch wirksam sein, wenn die Klemmung aus irgend welchen Gründen nicht genügend stark oder gelockert wäre.

Die Verklemmung des Verschlusses gegenüber dem Kupplungszapfen und dadurch dessen Einpressen in die Aufnahmeausnehmung werden dann mit großer Sicherheit erreicht, wenn der Verschluß des Aufnahmeeinsatzes bei Berührung des Kupplungszapfens an einer der Schwenklagerung gegenüberliegenden Seite gegenüber dem Aufnahmeeinsatz Spiel hat. Selbst bei einem gewissen Verschleiß innerhalb der Ausnehmung bleibt somit genügend Weg für den anpreßbaren Verschluß. um einen solchen Verschleiß nachträglich beim Verschließen auszugleichen.

Ausgestaltungen insbesondere dieser Betätigung des Verschlusses und dabei vor allem die Anordnung eines gleichzeitig zu betätigenden Signalstiftes, der dem Benutzer anzeigt, ob der Verschluß durch die Exzenterscheibe gesichert ist oder nicht, sind Gegenstand der Ansprüche 15 und 16.

Der axial über das Handrad vorstehende und somit nicht nur die Breite des Handrades, sondern auch noch einen Nachbarbereich dazu mit der Ausnehmung und dem Kupplungszapfen ausfüllende Aufnahmeeinsatz und vorzugsweise sein Verschluß können zumindest an ihrem zu der Wickelwelle gewandten stirnseitigen - aufgrund des Überstandes gegenüber dem Handrad freien - Rand einen nach innen gerichteten Vorsprung, vorzugsweise einen Ringwulst od.dgl. und der Kupplungszapfen eine Ringnut oder umgekehrt der Aufnahmeeinsatz nahe seinem stirnseitigen Austritt eine Ringnut und der Kupplungszapfen einen dazu formschlüssig passenden Bund, Wulst od.dgl. für eine in axialer Richtung formschlüssige Kupplung haben. Dadurch kann eine Wickelwelle auch eine bestmögliche Seiten führung erhalten und beim Einlegen auch in axialer Richtung genauestens positioniert werden. Auch während des Betriebes z.B. durch das auf- oder abzuwickelnde Bandmaterial und gewisse Schräglauftendenzen auftretende axiale Kräfte können auf diese Weise wesentlich einfache und ohne eventuelle Axialbewegungen innerhalb der Aufnahme-Ausnehmungen aufgefangen werden.

Ausgestaltungen der im dem Aufnahmeeinsatz befindlichen Kupplungsfeder für deren möglichst einfache Gestaltung bei dennnoch guter Kraftübertragung und für eine Unterstützung der Zentrierwirkung beim Einsetzen des Kupplungszapfens sind Gegenstand der Ansprüche 18 bis 21.

Es sei noch erwähnt, daß der Drehweg der Exzenterscheibe von der Offen- in die Schließstellung und umgekehrt etwa eine viertel Umdrehung betragen kann, also eine sehr einfache und schnelle Schließbewegung ermöglicht, die z.B. mit Hilfe eines Mehrkantes oder einer mehrkantförmigen Ausnehmung und einem dazu passenden Werkzeug durchgeführt werden kann.

Insgesamt ergibt sich eine Vorrichtung zum Kuppeln eines Wickelstabes od.dgl. mit einer Mitnehmerwelle, bei welcher auf einfache Weise die Einspannlänge der Kupplungszapfen vergrößert und somit auch bei hohen Drehgeschwindigkeiten und eventuellen Verformungen der Wickelwelle der Rundlauf verbessert und somit die Gefahr von Schwingungen und Beschädigungen der Vorrichtung vermindert ist und die Lebensdauer verlängert wird. Dies wird vor allem dadurch erreicht, daß der Aufnahmeeinsatz in seiner axialen Länge nicht mehr auf die Breite des Handrades beschränkt bleibt, sondern diese deutlich übertrifft und selbst mit einem eigenen Verschluß versehen ist, der von dem Handrad in bekannter Weise beaufschlagt und in Schließstellung gehalten oder in Offenstellung zum Öffnen freigegeben ist. Beispielsweise kann der Aufnahmeeinsatz etwa um die Hälfte der Breite oder etwa um die Breite des Handrades oder mehr gegenüber diesem vorsteht.

Ausgestaltungen vor allem des Verschlusses zur Erleichterung seines Aufschwenkens nach dem Aufklappen des Handrades sind Gegenstand der Ansprüche 22 bis 25. Diese Maßnahmen sorgen dafür, daß der in Gebrauchsstellung durch das verschlossene Handrad fest an Kupplungszapfen angedrückte Verschluß nach dem Öffnen des Handrades von selbst ein kurzes Stück weit in seine Öffnungslage verschwenkt wird, so daß der Benutzer dann problemlos an dem Verschluß anfassen und ihn ganz aufklappen kann.

Nachstehend ist die Erfindung mit ihren ihr als wesentlich zugehörenden Einzelheiten anhand der Zeichnung in einem Ausführungsbeispiel noch näher beschrieben. Es zeigt in zum Teil schematisierter Darstellung :

Fig. 1 eine Stirnansicht und

Fig. 2 einen Längsschnitt durch eine Vorrichtung zum Kuppeln eines Wickelstabes mit einer Mitnehmerwelle bei in Schließstellung befindlichem klappbarem Handrad,

Fig. 3 eine Stirnansicht und

Fig. 4 einen Längsschnitt durch eine Vorrichtung zum Kuppeln eines Wickelstabes gemäß der Erfindung in Offenstellung und somit bereit zum Einlegen oder Ausheben eines Wickelstabes, in vergrößertem Maßstab

Fig. 5 einen Teillängsschnitt durch einen oberen Bereich des klappbaren Handrades mit darin eingesetztem Exzenterverschluß und die Offenstellung des Handrades zeigendem Signalstift,

Fig. 6 eine der Fig.5 entsprechende Darstellung, bei welcher die das Handrad in Schließstellung fixierende Exzenterscheibe in Schließstellung und der Signalstellung innerhalb der Kontur des Handrades sind,

Fig. 7 eine um 90° gedrehte Ansicht bzw. einen Teilschnitt des Bereiches der Exzenterscheibe und des Signalstiftes, wobei dieser analog der Fig.6 die Schließstellung des Handrades zeigt ,

Fig. 8 eine der Fig.7 entsprechende Ansicht des Signalstiftes und der Exzenterscheibe in deren der Fig.5 entsprechenden Offenstellung,

Fig. 9 und 10 Darstellungen gemäß den Figuren 1 und 2 mit einer Abwandlung des Verschlusses, durch welche dieser nach dem Aufklappen des Handrades etwas in Richtung seines Aufschwenkens angehoben wird.

Eine im ganzen mit 1 bezeichnete Vorrichtung dient zum Kuppeln von Wickelstäben 2 od.dgl. mit einer Mitnehmerwelle 3 einer nicht näher dargestellten Wickelmaschine und ist als sogenanntes Klapplager ausgebildet. Solche Wickelstäbe 2 dienen beispielsweise zum Auf- oder Abwickeln von bahnförmigem Gut aus Papier, Textilien oder Folie.

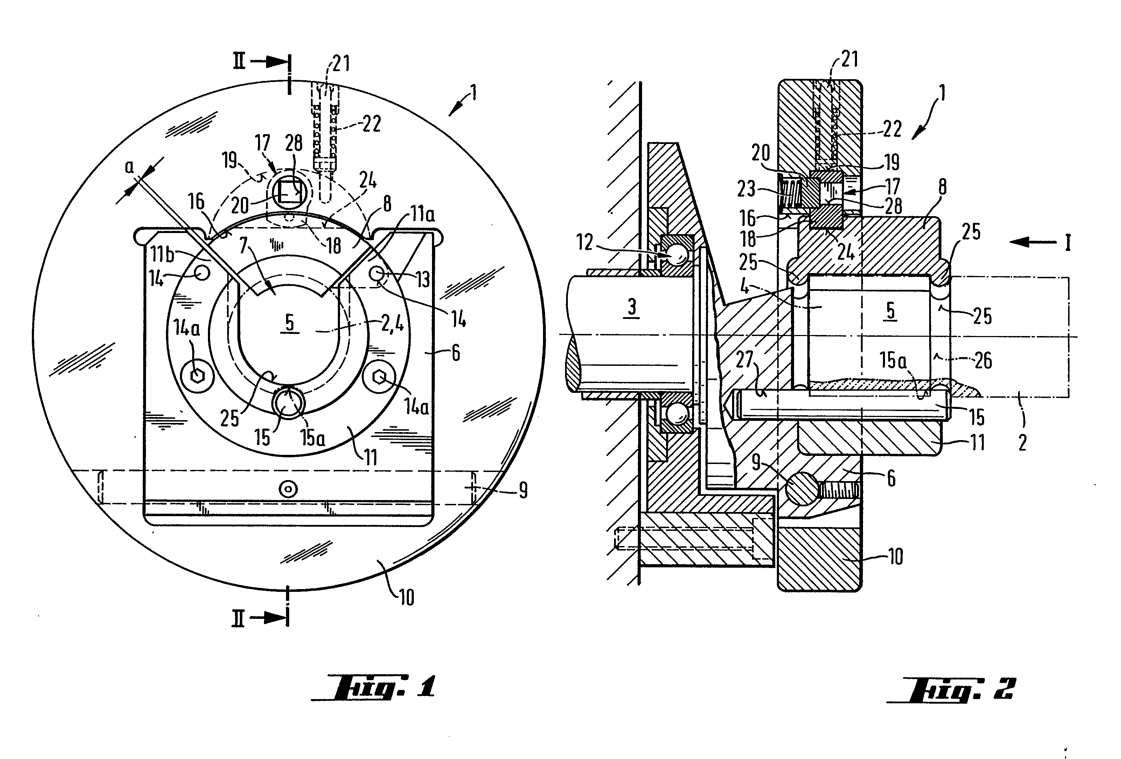

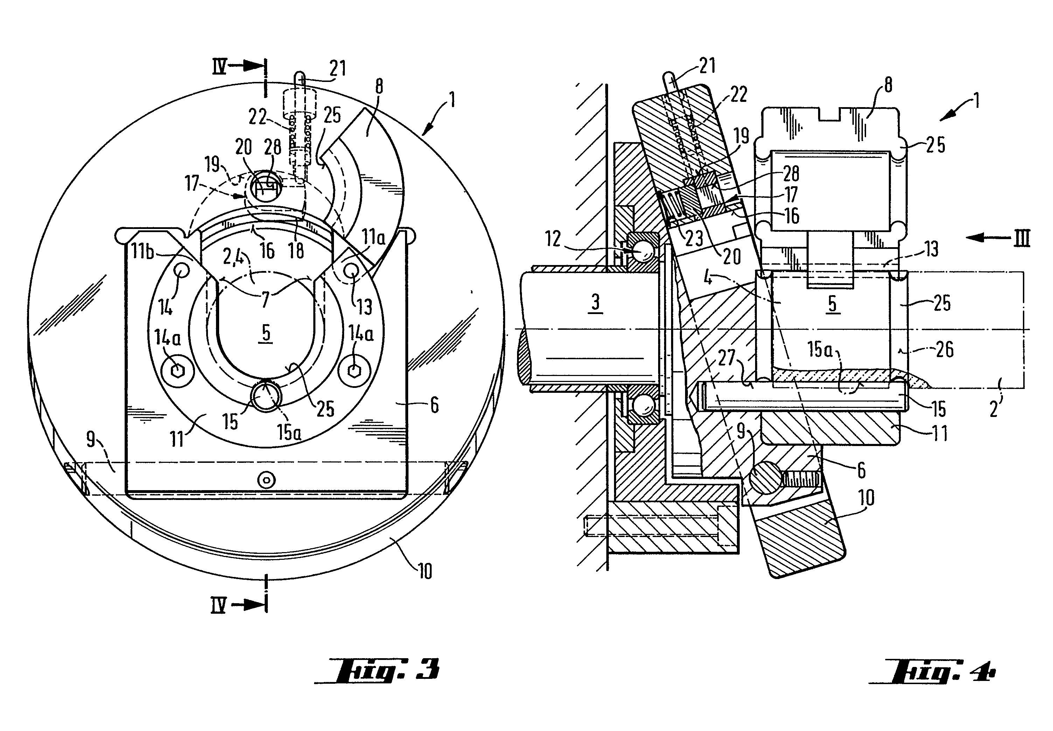

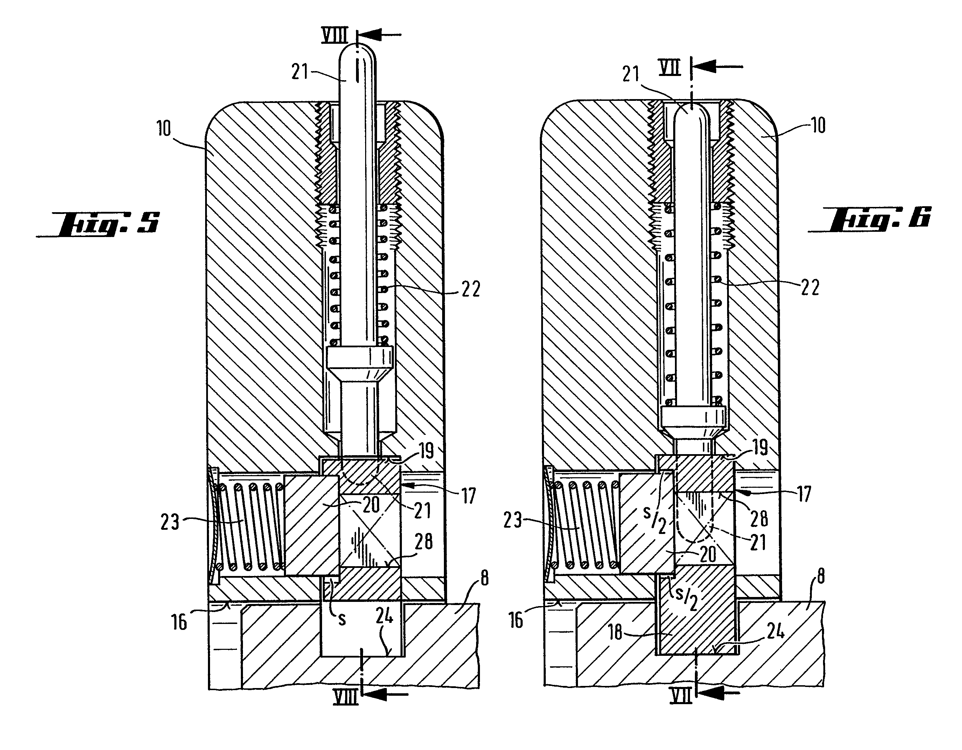

Die Kupplung erfolgt dabei dadurch , daß der Wickelstab 2 mit einem koaxialen Kupplungszapfen 4 in eine mit einer entsprechenden Gegenkontur versehene Ausnehmung 5 eines Aufnahmeteiles 6 einsetzbar und aus diesem aushebbar ist, wobei in Drehrichtung formschlüssig miteinander zusammenwirkende Bereiche miteinander kuppelbar sind und wobei der Kupplungszapfen 4 in Gebrauchsstellung von einem die Eintrittsöffnung 7 (Fig.3) in die Ausnehmung 5 verschließenden, noch näher zu beschreibenden Verschluß 8 übergriffen ist. Zu der Vorrichtung 1 gehört dabei außerdem ein um eine senkrecht zu dem Kupplungszapfen 4 orientierte Achse 9,schwenkbares oder klappbares Handrad 10, das in noch zu beschreibender Weise Teil des Verschlusses 8 ist bzw. mit diesem zusammenwirkt. Die zum Aufnehmen des Kupplungszapfens 4 dienende Ausnehmung 5 ist in einem von diesem Handrad 10 gemäß Fig.1 und 2 in Gebrauchsstellung umschlossenen Aufnahmeeinsatz 11 angeordnet.

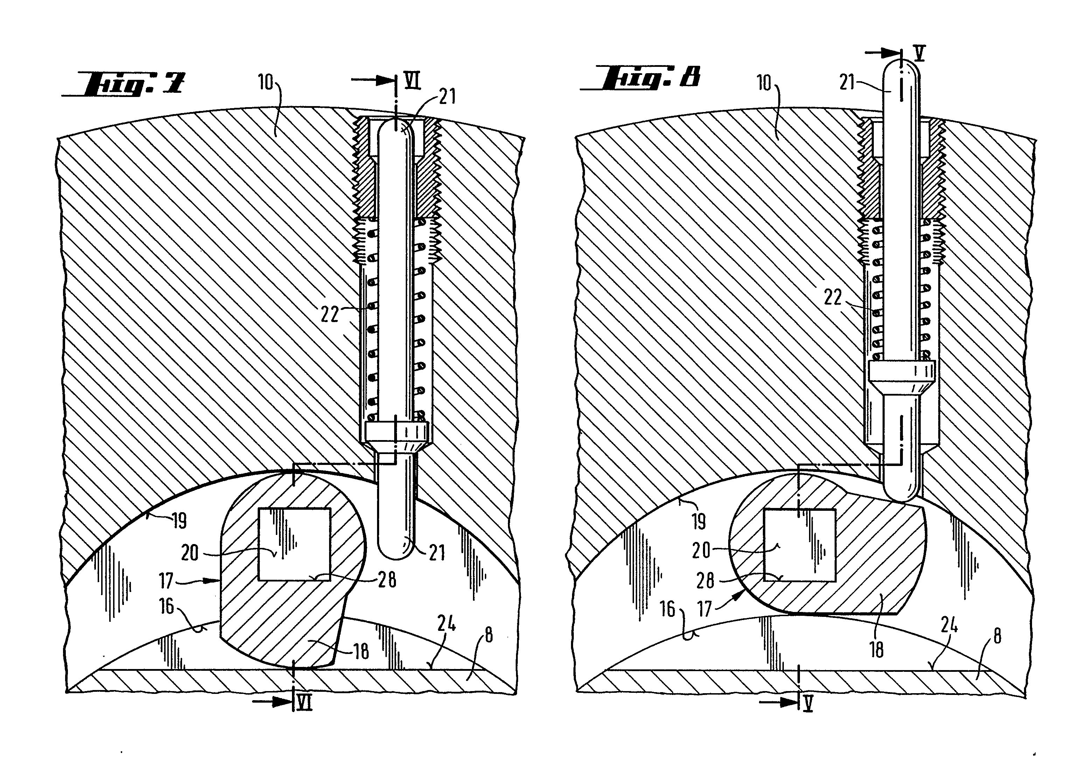

In den Figuren 2 und 4 erkennt man deutlich, daß der Aufnahmeeinsatz 11 und sein Verschluß 8 das Handrad 10 in dessen Schließposition stirnseitig auf der der Lagerung 12 des Aufnahmeteiles 6 und der Mitnehmerwelle 3 abgewandten, der Wickelwelle 2 zugewandten Seite überragen und die axiale Länge des Aufnahmeeinsatzes 11, seines Verschlusses 8 und der Aufnahmeausnehmung 5 größer als die Breite des Handrades 10 ist. Vor allem Fig.3 verdeutlicht, daß der Verschluß 8 für die Ausnehmung 5 des Aufnahmeeinsatzes 11 dabei an diesem Aufnahmeeinsatz 11 selbst angeordnet und bei geöffnetem Handrad 10 von diesem zum Öffnen und Schließen freigegeben ist.

Vor allem beim Vergleich der Figuren 1 bis 4 wird deutlich, daß eine wesentlich größere axialen Länge des Kupplungszapfens 4 von dem Aufnahmeeinsatz 11 umschlossen werden kann, so daß dieser gegen Verbiegungen durch starke Belastungen der Wickelwelle 2 besser geschützt wird. Gleichzeitig kann dennnoch das Handrad in üblicher Weise so schmal ausgestaltet werden, daß es um seine senkrecht zu dem Kupplungszapfen 4 verlaufende Achse 9 auf und zugeklappt oder geschwenkt werden kann. Dies wird dadurch erreicht, daß das Handrad 10 nicht unmittelbar und allein der Verschluß der Öffnung 7 der Ausnehmung 5 ist, sondern einen dort an dem Aufnahmeeinsatz 11 befestigten Verschluß 8 in Schließstellung hält oder aber zum Öffnen freigibt. Man könnte auch sagen, daß der Verschluß der Ausnehmung 5 nun zweigeteilt ist und sowohl aus dem eigentlichen Verschlußteil 8 als auch dem Handrad 10 gebildet wird.

Vor allem Fig.2 zeigt deutlich, daß der Kupplungszapfen auf diese Weise wie bisher innerhalb der Kontur des geschlossenen Handrades, aber auch noch ein Stück darüber hinaus umschlossen wird, und somit wesentlich größere Kräfte aufnehmen und übertragen kann. Eventuellen Biegebelastungen wird besser entgegengewirkt, so daß Schwingungen oder vorzeitiger Verschleiß zumindest eingedämmt oder unterbunden werden.

In besonders einfacher Weise ist im Ausführungsbeispiel der Verschluß 8 des Aufnahmeeinsatzes 11 an dem einen Rand 11a der Aufnahmeausnehmung 7 schwenkbar befestigt. Man erkennt dies besonders gut in Fig. 3. Dabei kann diese Schwenklagerung des Verschlusses 8 lösbar und wahlweise an dem einen oder dem anderen Öffnungsrand 11a oder 11b anbringbar sein. Dies ist im Ausführungsbeispiel dadurch verwirklicht, daß als Schwenkachse für den aufschwenkbaren Verschluß 8 der Aufnahmeöffnung 5 ein ausziehbarer Stift 13, insbesondere ein Kerbstift vorgesehen ist, für welchen beidseits der Aufnahmeöffnung 5 an deren Rändern 11a und 11b jeweils eine Einstecköffnung oder -bohrung 14 vorgesehen ist. Soll also der Verschluß 8 gegenüber der Anordnung in Fig.3 nach der anderen Seite hin aufschwenkbar sein, beispielsweise für die dieser dargestellten Vorrichtung 1 an derselben Wickelwelle 2 gegenüberliegende Vorrichtung, genügt es, die gegenüberliegende Bohrung 14 zur Lagerung des Stiftes 13 und des Verschlusses 8 zu verwenden. Ist dabei die Vorrichtung 1 vorgefertigt, kann sie entsprechend umgerüstet werden, indem der Stift 13 gezogen und zusammen mit dem Verschluß 8 umgesetzt wird.

Auch der Aufnahmeeinsatz 11 ist mittels koaxial zu der Mittelachse angeordneten Befestigungsschrauben 14a lösbar und um eine vertikale Achse um 180° gedreht ebenfalls in die Aufnahme 6 einsetzbar. Somit kann auch derselbe Einsatz wahlweise an dem einen oder anderen Lager einer Wickelwelle Verwendung finden. Dabei können an beiden Stirnseiten dieses lösbaren Aufnahmeeinsatzes 11 entsprechende Vertiefungen für eine Versenkung der Schraubenköpfe der Befestigungsschrauben 14a vorgesehen sein.

Zwar könnte die Innenkontur der Ausnehmung 5 des Aufnahmeteiles 6 beliebig und dabei auch mehrkantförmig sein. Besonders enge und spielarme Toleranzen lassen sich aber besonders einfach und preiswert herstellen, wenn diese Aufnahmeausnehmung 5 und der Kupplungszapfen 4 - wie im Ausführungsbeispiel dargestellt - einen kreisrunden Querschnitt haben, wobei der Verschluß 8 an seiner dem Kupplungszapfen 4 zugewandten Seite vorzugsweise und wie in Fig.1 und 3 erkennbar, ebenfalls eine zur der Krümmung der Oberfläche des Kupplungszapfens 4 passende kreisbogenförmige Kontur hat. Für den Formschluß in Drehrichtung ist dabei in dem Aufnahmeeinsatz 11 und in der Ausnehmung 5 wenigstens ein Keil oder eine Feder 15 und an dem Kupplungszapfen wenigstens eine diesen Keil oder die Feder 15 beim Einsetzen formschlüssig übergreifende Nut 15a vorgesehen. Die Art der Realisierung dieser Feder 15 und die Kontur dieser Feder und der Nut werden weiter unten erläutert.

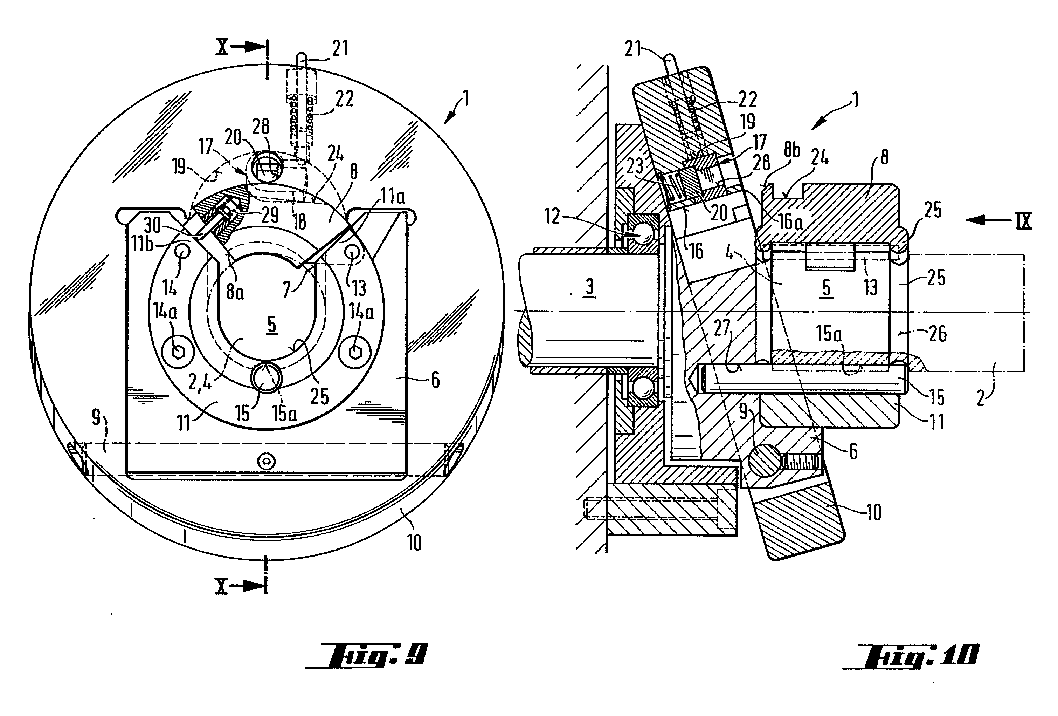

Um eine spielfreie und schwingungsarme Funktion der Vorrichtung 1 zu erlauben, ist der Verschluß 8 des Aufnahmeeinsatzes 11 in Gebrauchsstellung an dem Kupplungszapfen 4 anpreßbar. Dies könnte allein schon durch die diesen Verschluß 8 übergreifende Ausnehmung 16 des Handrades 10 geschehen, indem die Verschwenkung des Handrades 10 in Schließstellung gleichzeitig den Verschluß 8 gegen den Kupplungszapfen 4 anpreßt und anklemmt. Da jedoch damit zu rechnen ist, daß nach einer gewissen Anzahl von Öffnungs- und Schließbewegungen und vor allem bei hohen Drehzahlen diese Klemmwirkung nachlassen könnte, ist im Ausführungsbeispiel vorgesehen, daß das Handrad 10 ein in Schließstellung die Oberseite des Verschlusses 8 beaufschlagendes Klemmstück 17 aufweist. Dieses Klemmstück 17 ist dabei im Ausführungsbeispiel eine Exzenterscheibe oder Nockenscheibe, deren exzentrischer Bereich oder Nocken 18 gemäß den Figuren 5 bis 8 und auch gem. Fig.2 in Schließstellung die Oberseite des Verschlusses 8 beaufschlagt und in dieser Position selbsthemmend gehalten ist. Die als Klemmstück 17 dienende Exzenterscheibe hat dabei gemäß Fig.5 innerhalb des Klapprades in ihrer Ausnehmung 19 und gegenüber ihrer Drehlagerung 20 in radialer Richtung ein Spiel s, welches kleiner als die Exzentrizität des Klemmbereiches ist. Dadurch wird sichergestellt, daß bei gelockerter Exzenterscheibe deren Bewegung leichtgängig ist und eventuelle Ungenauigkeiten oder gar im Laufe der Zeit auftretende Verformungen sich nicht auf die Funktion auswirken, in Schließstellung gemäß Fig. 6 aber eine feste Verspannung zwischen Verschluß 8 und Handrad 10 erreicht wird, ohne daß dies von der Drehlagerung 20 behindert wird. In Fig. 6 wird deutlich, daß sich das an dieser Drehlagerung 20 befindliche Spiel s in Klemm- und Schließstellung am gesamten Umfang dieser Dreh lagerung 20 verteilt, so daß diese also die Verklemmung nicht behindert.

Damit ein gewisser Klemmweg zur Verfügung steht, hat der Verschluß 8 des Aufnahmeeinsatzes 11 gemäß Fig.1 bei Berührung des Kupplungszapfens 4 an seiner der Schwenklagerung 13 gegenüberliegenden Seite gegenüber dem Aufnahmeeinsatz 11 ebenfalls ein Spiel a. Somit wird beim Betätigen des Klemmstückes 17 in Schließstellung sichergestellt, daß nicht der Verschluß 8 gegen den Aufnahmeeinsatz 11, sondern wirklich gegen den Kupplungszapfen 4 gepreßt und dieser dadurch in den Aufnahmeeinsatz 11 und dessen Ausnehmung 6 gedrückt wird.

Gemäß Fig. 5 bis 8 - aber auch in den Figuren 1 bis 4 erkennbar - beaufschlagt die als Klemmstück 17 dienende Exzenterscheibe gleichzeitig mit ihrem Nocken 18 einen axial verstellbaren, in Schließstellung des Exzenters gemäß Fig.1 und 2 bzw. 6 und 7 innerhalb der Handradkontur befindlichen und in Offenstellung gemäß den übrigen Figuren vorstehenden Signalstift 21. Dieser Signalstift 21 ist dabei gegen die Kraft einer Feder 22 von der Exzenterscheibe und/oder dem an dieser befindlichen Nocken 18 teilweise aus dem Handrad 10 ausschiebbar, wobei die Exzenterscheibe ihrerseits von einem sie reibschlüssig stirnseitig beaufschlagenden Druckkörper, im Ausführungsbeispiel der Drehlagerung 20 in Offenstellung festlegbar ist, wobei die Reibkraft zwischen diesem Druckstück 20 und der Exzenterscheibe 17 größer als die Druckkraft der Rückstellfeder 22 des Signalstiftes 21 ist. Man erkennt anhand der Figuren 5 und 8 deutlich, wie der Signalstift 21 durch den Nocken 18 entgegen der Wirkung der Feder 22 angehoben gehalten wird, wobei das Druckstück bzw. Lagerstück 20, welches seinerseits von einer Feder 23 gegen den Exzenter gedrückt wird, eine Rückdrehung des Exzenters durch die entsprechende Reibkraft verhindert. Somit weiß der Benutzer bei verschlossenem Handrad immer, ob diese Verschlußstel lung auch mit Hilfe des Klemmstückes 17 gesichert ist oder nicht.

Dieses Klemmstück 17 bzw. die Exzenterscheibe beaufschlagt dabei nicht einfach nur die Oberseite des Verschlusses 8, sondern an dem Verschluß 8 ist eine Nut 24 od.dgl. Ausnehmung vorgesehen, in welche die Exzenterscheibe bzw. das Klemmstück 17 in Schließstellung mit dem Exzenterteil oder Nocken 18 eingreift und an deren Grund und/oder Rand die Exzenterscheibe ihre Klemmkraft ausübt. Somit ergibt sich auch in axialer Richtung eine wirksame Verriegelung des Handrades 10. Entsprechend große Belastungen der Wickelwelle 2 und hohe Drehzahlen bei dabei nicht zu vermeidenden Biegekräften sind möglich, ohne daß dadurch auftretende Auslenkkräfte an dem Handrad 10 dieses ungewollt öffnen und damit auch den Verschluß 8 freimachen können.

Eine wichtige Ausgestaltung des Aufnahmeeinsatzes 11 ist vor allem anhand der Figuren 2 und 4 erkennbar. Demgemäß hat der Aufnahmeeinsatz 11 und auch sein Verschluß 8 an ihrem zu der Wickelwelle 2 gewandten stirnseitigen Rand einen nach innen gerichteten Vorsprung, im Ausführungsbeispiel einen auch stirnseitig etwas vorstehenden Ringwulst 25 und der Kupplungszapfen 4 hat eine dazu passende Ringnut 26, so daß sich die in Fig.2 erkennbare axiale Festlegung des Kupplungszapfens 4 an diesem Aufnahmeeinsatz 11 ergibt. Entsprechend genau ist auch die Seitenführung der Wickelwelle 2, Denkbar wäre natürlich auch eine umgekehrte Anordnung, bei welcher der Aufnahmeeinsatz 11 nahe seinem stirnseitigen Austritt eine Ringnut und der Kupplungszapfen 4 einen dazu formschlüssig passenden Bund, Wulst od.dgl. für die in axialer Richtung formschlüssige Kupplung haben könnten.

Da der Aufnahmeeinsatz 11 auch um 180° gedreht einsetzbar ist, sind im Ausführungsbeispiel an beiden Stirnseiten Ringwülste 25 vorgesehen.

Die schon erwähnte, in dem Aufnahmeeinsatz 11 befindliche Kupplungsfeder 15 zur Übertragung des Drehmomentes ist im Ausführungsbeispiel als den Aufnahmeeinsatz 11 axial durchsetzender Rundbolzen ausgebildet, welcher mit einem Bruchteil seines Querschnittes aus der Kontur des Aufnahmeeinsatzes nach innen in die Ausnehmung 5 vorsteht. Es ergibt sich somit ein kreisbogenförmiger Querschnitt dieser Feder 15, der zu einer zentrierenden Kupplung mit der einen entsprechenden Querschnitt aufweisenden Nut des Kupplungszapfens 4 führt. Dabei ist in besonders vorteilhafter Weise diese Kupplungsfeder 15 als in eine entsprechende Teilöffnung des Aufnahmeeinsatzes 11 axial einschiebbar und gegebenenfalls wieder herausziehbarer Stift, vorzugsweise als Bolzen ausgebildet, der in Gebrauchsstellung in seiner Ausnehmung vorzugsweise formschlüssig und insbesondere in einem Klemmsitz angeordnet ist. Dabei erkennt man in den Figuren 2 und 4, daß diese Kupplungsfeder 15 in dem Aufnahmeeinsatz 11 länger als dieser ist und in eine koaxiale Bohrung 27 od.dgl. Öffnung der Aufnahme 6 paßt und den Aufnahmeeinsatz 11 zusätzlich mit dieser Aufnahme 6 in Drehrichtung kuppelt. Somit erfolgt die Kupplung dieses Aufnahmeeinsatzes 11 mit der Aufnahme 6 nicht nur über die schon erwähnten Befestigungsschrauben 14a, sondern zusätzlich auch durch diesen Kupplungsfeder-Bolzen 15. Dieser Vorteil wäre dabei auch erzielbar, wenn die Kupplungsfeder 15 keine kreisrunde Querschnittsform , sondern eine beliebige mehrkantförmige Form hätte.

Zwar könnte diese Kupplungsfeder 15 vor allem dann, wenn mehrere solche Federn am Umfang verteilt sind, gegenüber der in Fig. 1 und 3 dargestellten Position auch eine etwas andere Lage gegenüber der Aufnahme-Ausnehmung 5 haben oder es könnte eventuell eine solche Kupplungsfeder sogar in dem Verschluß 8 vorgesehen werden, jedoch ist es besonders günstig, wenn die Kupplungsfeder 15 bzw. der Kupplungsbolzen an der tiefsten Stelle des Aufnahmeeinsatzes 11 und somit dem Verschluß genau gegenüber eingefügt ist, weil dann beim Einsetzen des Kupplungszapfens 4 dieser besonders einfach und spielfrei eingefügt werden kann.

Es sei noch erwähnt, daß gemäß Fig. 7 und 8 der Weg des Exzenters oder Nockens 18 von der Offen- in die Schließstellung des Klemmstückes 17 etwa eine viertel Umdrehung beträgt. Somit ist ein Überdrehen oder eine sonstige Fehlbedienung praktisch ausgeschlossen. Gleichzeitig kann die entsprechende Sicherungsbewegung sehr schnell und einfach durchgeführt werden. Dies erfolgt auf einfache Weise mit dem in denselben Figuren erkennbaren Mehrkant 28 und einem dazu passenden Werkzeug.

Insgesamt ergibt sich eine Vorrichtung 1, die angepaßt an auftretende Drehzahlen und Kräfte eine von der Breite des Handrades unabhängige Kupplungslänge zwischen Kupplungszapfen 4 und Aufnahmeeinsatz 11 ermöglicht, wobei natürlich auch der Aufnahmeeinsatz 11 eine ausreichende Materialstärke hat. Dabei können sowohl radiale als auch axiale Kräfte in diesen Aufnahmeeinsatz 11 eingeleitet werden. Dennoch ist die Bedienung des gesamten Klapplagers praktisch unverändert, weil zum Öffnen und Schließen die bewährte vorteilhafte Verschwenkung des Handrades vorgesehen wird, die nun mit einer zusätzlichen Betätigung des Verschlusses 8 kombiniert ist, damit auch im Verschlußbereich die axiale Kupplungslänge erreicht wird.

Ein Klapplager 1 mit einem eine Kupplungsausnehmung 5 aufweisenden Aufnahmeeinsatz 11 und einer diesen enthaltenden Aufnahmeteil 6 hat an dem Aufnahmeeinsatz 11 einen eigenen Verschluß 8, der von einem schwenkbaren Handrad in Schließstellung gehalten und gedrückt werden kann, gleichzeitig aber erlaubt, den vorzugsweise lösbaren Aufnahmeeinsatz 11 nicht nur innerhalb des Handrades 10, sondern dieses überragend vorzusehen, und somit eine größere axiale Kupplungslänge zu bewirken.

Die Figuren 9 und 10 zeigen ein Ausführungsbeispiel, welches alle Merkmale und Maßnahmen der vorbeschriebenen Ausführungsbeispiele aufweist, so daß eine Reihe von Bezugszahlen wiederholt sind, ohne ins einzelne beschrieben zu sein.

Zusätzlich ist aber bei dieser Vorrichtung 1 gemäß den Fig. 9 und 10 dafür gesorgt, daß bei aufgeklapptem Handrand 10 der Verschluß 8 leichter geöffnet werden kann. Dies wird dadurch erreicht, daß der Verschluß 8 bei geöffnetem Handrad 10 - wie in Fig.9 deutlich erkennbar - aus seiner endgültigen Schließlage etwas angehoben ist. In Fig.10 ist angedeutet, daß er aber durch das Handrad 10 in seine endgültige Schließlage niederdrückbar ist. Dies läßt sich auf verschiedene Wege erreichen. Bevorzugt ist es, wenn an dem Verschluß 8 eine in seine Öffnungsrichtung wirkende Rückstellkraft, im Ausführungsbeispiel eine Feder 29 angreift, deren Auslenkung des Verschlusses 8 kleiner als dessen gesamter Verschwenkweg ist.

Zwar könnte eine Rückstellfeder unmittelbar an der Schwenkachse 13 des Verschlusses 8 in Form einer Schenkelfeder angreifen, jedoch ist im Ausführungsbeispiel gem. Fig. 9 vorgesehen, daß aus der dem Aufnahmeeinsatz 11 in Schließstellung zugewandten, der Schwenkachse 13 abgewandten Stirnseite 8a des schwenkbaren Verschlusses 8 ein federbelasteter, gegen die Kraft der Feder 29 versenkbarer Anschlagstift 30 vorsteht. Somit enthält der Verschluß 8 selbst den Rückstellmechanismus, welcher ihn nach Öffnen des Handrades 10 selbsttätig etwas in seine Öffnungsrichtung anhebt, um ihn an der Stirnseite 8 besser erfassen und vollens aufklappen zu können. Beim Schließen kann der Verschluß 8 leicht gegenüber der in Fig. 9 dargestellten Position ganz zugedrückt werden, wonach das Handrad 10 in seine Schließstellung gem. Fig.2 geklappt werden kann.

Um auch diesen Vorgang zu automatisieren, dient im Ausführungsbeispiel das Handrad 10 selbst dazu, den Verschluß nach dem Zuschwenken noch das letzte Stück gegen die Kraft der Rückstellfeder 9 ganz niederzudrücken. Dazu ist der dem Handrad 10 zugewandte Rand 8b des Verschlusses 8 abgeschrägt oder könnte auch abgerundet sein. Die radiale Erstreckung dieser Abschrägung ist dabei etwas größer als die federbedingte Anhebung des Verschlusses 8, so daß beim Verschwenken des Handrades 10 aus der in Fig.10 dargestellten Lage in die in Fig. 2 erkennbare Position der Rand 16a auf diesen abgeschrägten Rand 8b des von dem Anschlagstift 30 geringfügig angehobenen Verschlusses 8 gelangt, so daß eine weitere Verschwenkung des Handrades 10 in die endgültige Schließlage den Verschluß 8 automatisch in seine endgültige Verschlußposition niederdrückt.

Es sei noch erwähnt, daß bei genügend Platz eventuell auch der Rand 16 a der Ausnehmung 16 des Handrades 10 abgerundet oder abgeschrägt sein könnte. Einfacher und preiswerter ist jedoch die im Ausführungsbeispiel vorgesehene Abschrägung des Randes 8b des Verschlusses 8.

Wird bei einer Vorrichtung 1 gemäß den Figuren 9 und 10 das Handrad aus der in Fig.2 dargestellten Schließlage aufgeklappt, wird der Verschluß 8 selbsttätig etwas angehoben, so daß der Benutzer ihn leicht erfassen und vollens auf klappen kann, was bei in vollständiger Verschlußlage bleibendem Verschluß aufgrund des nur sehr geringen Spieles a unter Umständen schwieriger wäre. Dennoch ist das Verschließen nicht behindert, weil ein geringfügiges und wenig Kraft benötigendes Niederdrücken des Verschlusses gegen die Rückstellfeder 29 einfach bewerkstelligt werden könnte oder mit Hilfe der Abschrägung des Randes 8b und/oder eventuell des Randes 16a sogar automatisch durch die Schließbewegung des Handrades 10 erfolgen kann.

**Ansprüche**

1. Vorrichtung (1) zum Kuppeln eines Wickelstabes (2) od.dgl. mit einer Mitnehmerwelle (3) einer Wickelmaschine, wobei der Wickelstab bzw. die Wickelwelle (2) einen koaxialen Kupplungszapfen (4) aufweist und dieser Kupplungszapfen (4) in eine Ausnehmung (5) eines Aufnahmeteiles (6) einsetzbar und aus diesem aushebbar ist, wobei in Drehrichtung formschlüssig miteinander zusammenpassende Bereiche miteinander kuppelbar sind und wobei der Kupplungszapfen (4) in Gebrauchsstellung von einem die Eintrittsöffnung (7) in die Ausnehmung (5) verschließenden Verschluß (8) übergriffen ist, welcher Verschluß (8) von einem um eine senkrecht zu dem Kupplungszapfen (4) orientierte Achse (9) schwenkbaren oder klappbaren Handrad (10) gebildet oder in Schließstellung gehalten ist und wobei die Ausnehmung (5) für den Kupplungszapfen (4) in einem von dem Handrad (10) in Gebrauchsstellung umschlossenen Aufnahmeeinsatz (11) angeordnet ist, **dadurch gekennzeichnet,** daß der Aufnahmeeinsatz (11) und sein Verschluß (8) das Handrad (10) in dessen Schließposition stirnseitig auf der der Lagerung (12) des Aufnahmeteiles (6) abgewandten, der Wickelwelle zugewandten Seite überragen und die axiale Länge des Aufnahmeeinsatzes (11) , der darin enthaltenen Aufnahmeausnehmung (5) und des Verschlusses (8) größer als die Breite des Handrades (10) ist und daß der Verschluß (8) für die Ausnehmung (5) an dem Aufnahmeeinsatz (11) selbst angeordnet und bei geöffnetem Handrad (10) von diesem zum Öffnen und Schließen freigegeben ist.

2. Vorrichtung nach Anspruch 1, dadurch gekennzeichnet, daß der Verschluß (8) des Aufnahmeeinsatzes (11) an dem einen Rand (11a) der Aufnahmeausnehmung (7) schwenkbar befestigt ist.

3. Vorrichtung nach Anspruch 1 oder 2, dadurch gekennzeichnet, daß die Schwenklagerung des Verschlusses (8) der Aufnahme lösbar und wahlweise an dem einen oder dem anderen Öffnungsrand (11a, 11b) anbringbar ist.

4. Vorrichtung nach einem der Ansprüche 1 bis 3, dadurch gekennzeichnet, daß als Schwenkachse für den aufschwenkbaren Verschluß (8) der Aufnahmeöffnung (5) ein ausziehbarer Stift (13) insbesondere Kerbstift vorgesehen ist, für welchen beidseits der Aufnahmeöffnung (5) eine Einstecköffnung oder -bohrung (14) vorgesehen ist.

5. Vorrichtung nach einem der Ansprüche 1 bis 4, dadurch gekennzeichnet, daß der Aufnahmeeinsatz (11) lösbar und um eine vertikale Achse um 180° gedreht ebenfalls in die Aufnahme (6) einsetzbar ist.

6. Vorrichtung nach einem der Ansprüche 1 bis 5, dadurch gekennzeichnet, daß für den Formschluß in Drehrichtung in dem Aufnahmeeinsatz (11) wenigstens wenigstens ein Keil oder eine Feder (15) und an dem Kupplungszapfen wenigstens eine diesen Keil oder die Feder (15) beim Einsetzen formschlüssig übergreifende Nut vorgesehen ist.

7. Vorrichtung insbesondere nach einem der Ansprüche 1 bis 6, dadurch gekennzeichnet, daß die Aufnahmeausnehmung (5) innerhalb des Aufnahmeeinsatzes und der Kupplungszapfen (4) einen kreisrunden Querschnitt haben und der Verschluß (8) des Aufnahmeeinsatzes an seiner dem Kupplungszapfen (4) zugewandten Seite vorzugsweise eine zu der Krümmung der Oberfläche des Kupplungszapfens (4) passende kreisbogenförmige Kontur hat.

8. Vorrichtung nach einem der Ansprüche 1 bis 7, dadurch gekennzeichnet, daß der Verschluß (8) des Aufnahmeeinsatzes (11) in Gebrauchsstellung an den Kupplungszapfen (4) anpreßbar ist.

9. Vorrichtung nach einem der Ansprüche 1 bis 8, dadurch gekennzeichnet, daß der Verschluß (8) des Aufnahmeeinsatzes (11) durch die ihn übergreifende Ausnehmung (16) des Handrades (10) gegen den Kupplungszapfen (4) anpreßbar und anklemmbar ist.

10. Vorrichtung nach einem der Ansprüche 1 bis 9, dadurch gekennzeichnet, daß das Handrad (10) ein in Schließstellung die Oberseite des Verschlusses (8) des Aufnahmeeinsatzes beaufschlagendes Klemmstück (17) aufweist.

11. Vorrichtung nach einem der Ansprüche 1 bis 10, dadurch gekennzeichnet, daß das Klemmstück (17) in dem Klapprad eine Exzenterscheibe oder Nockenscheibe ist, deren exzentrischer Bereich (18) in Schließstellung die Oberseite des Verschlusses (8) des Aufnahmeeinsatzes beaufschlagt und vorzugsweise selbsthemmend gehalten ist.

12. Vorrichtung nach einem der Ansprüche 1 bis 11, dadurch gekennzeichnet, daß die Exzenterscheibe innerhalb des Klapprades in ihrer Ausnehmung und gegenüber ihrer Drehlagerung (20) in radialer Richtung Spiel (s) hat, welches kleiner als die Exzentrität des Klemmbereiches ist.

13. Vorrichtung nach einem der Ansprüche 1 bis 12, dadurch gekennzeichnet, daß an dem Verschluß (8) des Aufnahmeeinsatzes eine Nut (24) od.dgl. Ausnehmung vorgesehen ist, in welche die Exzenterscheibe (17) in Schließstellung eingreift und an deren Grund und/oder Rand die Exzenterscheibe ihre Klemmkraft ausübt.

14. Vorrichtung nach einem der vorstehenden Ansprüche, dadurch gekennzeichnet, daß der Verschluß (8) des Aufnahmeeinsatzes (11) bei Berührung des Kupplungszapfens (4) an seiner der Schwenklagerung (13) gegenüberliegenden Seite gegenüber dem Aufnahmeeinsatz (11) Spiel (a) hat.

15. Vorrichtung nach einem der Ansprüche 1 bis 14, dadurch gekennzeichnet, daß die Exzenterscheibe einen axial verstellbaren, in Schließstellung des Exzenters innerhalb der Handradkontur befindlichen und in Offenstellung vorstehenden Signalstift (21) beaufschlagt.

16. Vorrichtung nach Anspruch 14, dadurch gekennzeichnet, daß der Sginalstift (21) gegen die Kraft einer Feder (22) von der Exzenterscheibe und/oder dem an dieser befindlichen Nocken (18) teilweise aus dem Handrad (10) ausschiebbar ist und daß die Exzenterscheibe ihrerseits von einem sie reibschlüssig stirnseitig beaufschlagenden Druckkörper (20) in Offenstellung festlegbar ist, wobei die Reibkraft zwischen dem Druckstück (20) und der Exzenterscheibe (17) größer als die Druckkraft der Rückstellfeder (22) des Signalstiftes (21) ist.

17. Vorrichtung nach einem der vorstehenden Ansprüche, dadurch gekennzeichnet, daß der Aufnahmeeinsatz (11) und vorzugsweise sein Verschluß (8) zumindest an ihrem zu der Wickelwelle (2) gewandten stirnseitigen Rand einen nach innen gerichteten Vorsprung, vorzugsweise einen Ringwulst (25) od.dgl. und der Kupplungszapfen eine Ringnut (26) oder umgekehrt der Aufnahmeeinsatz (11) nahe seinem stirnseitigen Austritt eine Ringnut und der Kupplungszapfen (4) einen dazu formschlüssig passenden Bund, Wulst od.dgl. für eine in axialer Richtung formschlüssige Kupplung haben.

18. Vorrichtung nach einem der Ansprüche 1 bis 17, dadurch gekennzeichnet, daß die in dem Aufnahmeeinsatz (11) befindliche Kupplungsfeder (15) als den Aufnahmeeinsatz (11) axial durchsetzender Rundbolzen ausgebildet ist, welcher mit einem Bruchteil seines Querschnittes aus der Kontur des Aufnahmeeinsatzes nach innen in die Ausnehmung (5) vorsteht.

19. Vorrichtung nach einem der Ansprüche 1 bis 18, dadurch gekennzeichnet, daß die Kupplungsfeder (15) als in eine entsprechende Teilöffnung des Aufnahmeeinsatzes (11) axial einschiebbarer und gegebenenfalls wieder herausziehbarer Stift, vorzugsweise als Bolzen ausgebildet ist, der in Gebrauchsstellung in seiner Ausnehmung vorzugsweise formschlüssig und insbesondere in einem Klemmsitz angeordnet ist.

20. Vorrichtung nach einem der Ansprüche 1 bis 19, dadurch gekennzeichnet, daß die Kupplungsfeder (15) in dem Aufnahmeeinsatz (11) länger als dieser ist und in eine koaxiale Bohrung (27) od.dgl. Öffnung der Aufnahme (6) paßt und den Aufnahmeeinsatz (11) mit der Aufnahme (6) auch in Drehrichtung kuppelt.

21. Vorrichtung nach einem der Ansprüche 1 bis 20, dadurch gekennzeichnet, daß die Kupplungsfeder (15) vorzugsweise der Kupplungsbolzen an der tiefsten Stelle des Aufnahmeeinsatzes (11) in diesen eingefügt ist.

22. Vorrichtung nach einem der Ansprüche 1 bis 21, dadurch gekennzeichnet, daß der Verschluß (8) bei geöffnetem Handrad (10) aus seiner endgültigen Schließlage etwas angehoben und insbesondere durch das Handrad (10) niederdrückbar ist.

23. Vorrichtung nach einem der Ansprüche 1 bis 22, dadurch gekennzeichnet, daß an dem Verschluß (8) eine in seine Öffnungsrichtung wirkende Rückstellkraft, insbesondere eine Feder (29) angreift, deren Auslenkung kleiner als der gesamte Verschwenkweg des Verschlusses (8) ist.

24. Vorrichtung nach einem der Ansprüche 1 bis 23, dadurch gekennzeichnet, daß aus der dem Aufnahmeeinsatz (11) in Schließstellung zugewandten, der Schwenkachse (13) abgewandten Stirnseite (8a) des schwenkbaren Verschlusses (8) ein federbelasteter, gegen die Kraft der Feder (29) versenkbarer Anschlagstift (30) vorsteht.

25. Vorrichtung nach einem der Ansprüche 1 bis 24, dadurch gekennzeichnet, daß der dem Handrad (10) zugewandte, insbesondere bogenförmige Rand (8b) des Verschlusses (8) und/oder der diesem zugewandte Rand (16a) der Ausnehmung (16) des Handrades (10) abgerundet oder abgeschrägt ist, wobei die radiale Erstreckung der Abschrägung vorzugsweise größer als die federbedingte Anhebung des Verschlusses (8) ist.

26. Vorrichtung nach einem der Ansprüche 1 bis 25, dadurch gekennzeichnet, daß der Aufnahmeeinsatz (11) etwa um die Hälfte der Breite oder etwa um die Breite des Handrades (10) oder mehr gegenüber diesem vorstehen.

Fig. 2

Fig. 1

Fig. 3

Fig. 4

EP 0 348 806 A2

Fig. 5

Fig. 6

EP 0 348 806 A2

Fig. 7

Fig. 8

EP 0 348 806 A2

**Fig. 9**

**Fig. 10**

EP 0 348 806 A2